# EUROPEAN PATENT APPLICATION

(11) **EP 4 803 362 A1**
(43) Date of publication of application: **09.09.2026**
(21) Application number: 24896694.7
(22) Date of filing: 29.11.2024
(51) Int. Cl.: B60N 2/28, B62B 7/08, B62B 7/14

(54) **CHILD CARRIER CAPABLE OF SWITCHING BETWEEN MULTIPLE SCENARIOS**

(30) Priority: 01.12.2023 CN 202323284378 U
(71) Applicant: Sunnylove Baby Products Zhuhai Co., Ltd., Zhuhai, Guangdong 519000 (CN)
(72) Inventor: LIU, Xiuping, Zhuhai, Guangdong 519000 (CN); SU, Lin, Zhuhai, Guangdong 519000 (CN)
(74) Representative: Metida
(86) International application number: PCT/CN2024/135518
(87) International publication number: WO 2025/113611

(57) **Abstract**

The present application discloses a child carrier capable of switching between multiple scenarios, including a carrier body, a support assembly, and a connecting joint, the support assembly connected to the carrier body and having a unfolded state and a folded state, the support assembly switched between the unfolded state and the folded state to correspondingly switch the child carrier between a stroller use state and a car seat use state, respectively, only requiring operation of the support assembly to switch between the unfolded state and the folded state, thereby switching the child carrier between the stroller use state and the car seat use state, correspondingly, thus enabling the child carrier to meet usage needs of different usage scenarios, having features of fast switching, convenient operation, multi-functionality, and strong adaptability; at the same time, when a user goes out by car, there is no need to additionally equip a dedicated stroller frame, effectively reducing the quantity and weight of child gear to carry, facilitating travel.

## Description

### TECHNICAL FIELD

The present application relates to the technical field of children's products.

### BACKGROUND

A baby stroller plays an important role for a user to carry an infant out in daily life, and has become one of the indispensable child products in the growth process of a child. In the prior art, the structures of baby strollers are various, the connecting relationship of each rod members is also different, the load-bearing stability of the stroller, the way of mounting a seat, the folding way and folding principle of a stroller frame are also different, and the form and volume after being folded are also different. To simplify the rod structure of a baby stroller, a more convenient folding operation, and a smaller volume after being folded, in addition to good load-bearing performance, has always been a goal continuously pursued by those skilled in the art.

On an opposite aspect, a child car seat is usually only mounted on a car for a child to use when riding, and the utilization rate thereof is low. In the prior art, there are also some baby strollers on a stroller frame of which a child car seat may be fixedly mounted, but usually a detachably connected car seat bracket is provided on the stroller frame, or a matched detachable connecting structure is provided between the stroller frame and the child car seat to realize the connection therebetween, which makes the structure of the stroller complicated, makes the structure of the stroller frame not flat enough after being folded and thus affects storage and carrying, and also requires the structure of the car seat to be configured accordingly, and therefore lacks universality.

To this end, the present application is proposed for the problems above.

### SUMMARY

The present application aims to overcome the deficiencies of the prior art by providing a child carrier capable of switching between multiple scenarios, where the child carrier may be correspondingly switched between a stroller use state and a car seat use state simply by operating a support assembly to switch between an unfolded state and a folded state, so that the child carrier may meet the use demands of different application scenarios, having the characteristics of rapid switching, multi-functionality, and strong applicability.

The present application provides a child carrier capable of switching between multiple scenarios, including:

a carrier body, the carrier body having a seat portion and a backrest assembly, the backrest assembly rotatably connected to the seat portion, a backrest locking mechanism provided between the backrest assembly and the seat portion and configured to lock the backrest assembly relative to the seat portion in response to the backrest assembly tilting backward relative to the seat portion to a preset angle;

a support assembly, the support assembly connected to the carrier body and having an unfolded state and a folded state, the support assembly switched between the unfolded state and the folded state to correspondingly switch the child carrier between a stroller use state and a car seat use state, respectively, the child carrier used as a baby stroller in the stroller use state, and the child carrier used for connection to a car seat in the car seat use state;

a connecting joint, the connecting joint connected to the carrier body or the support assembly, the connecting joint configured to cooperate with an international standards organization FIX (hereinafter referred to as ISOFIX) assembly connector on the car seat in response to the child carrier being in the car seat use state;

the child carrier further has a folded storage state, and in the folded storage state of the child carrier, a front surface of the backrest assembly and an upper surface of the seat portion are opposite to each other and form an acute angle or are parallel, and the support assembly is in a folded state.

According to the aforementioned child carrier capable of switching between multiple scenarios, the connecting joint is an ISOFIX assembly joint or an elastic buckle, the connecting joint connected to the carrier body or the support assembly via a connecting soft strap.

According to the aforementioned child carrier capable of switching between multiple scenarios, an ISOFIX assembly is further included, the ISOFIX assembly provided on the support assembly or the carrier body, the connecting joint being an ISOFIX assembly joint and provided on the ISOFIX assembly.

According to the aforementioned child carrier capable of switching between multiple scenarios, the ISOFIX assembly is provided on the support assembly, and in the car seat use state, the ISOFIX assembly is located on a lower side or an outer side of the support assembly; in the stroller use state, the support assembly drives the ISOFIX assembly to unfold relative to the carrier body and the ISOFIX assembly remains folded and connected to the support assembly; in the car seat use state, the ISOFIX assembly is foldable or unfoldable relative to the support assembly to enable the connecting joint to cooperate with the ISOFIX assembly connector on the car seat.

According to the aforementioned child carrier capable of switching between multiple scenarios, the backrest locking mechanism includes a backrest locking hole provided on the backrest assembly and a backrest locking block slidably provided on the seat portion, the backrest locking block being configured to insert into the backrest locking hole in response to the backrest assembly tilting backward relative to the seat portion to the preset angle, a locking slider elastic member being provided between the backrest locking block and the seat portion and configured to enable the backrest locking block to elastically insert into the backrest locking hole.

According to the aforementioned child carrier capable of switching between multiple scenarios, a handle assembly is further included, the handle assembly slidably provided on the backrest assembly, the backrest locking mechanism configured to be linked and released by the handle assembly in response to the handle assembly sliding relative to the backrest assembly to a preset position.

According to the aforementioned child carrier capable of switching between multiple scenarios, a use state locking mechanism is further included, the use state locking mechanism correspondingly configured to lock the child carrier in the stroller use state or the car seat use state, and the use state locking mechanism configured to be linked and released by the backrest assembly in response to the backrest assembly tilting forward relative to the seat portion to a preset angle.

According to the aforementioned child carrier capable of switching between multiple scenarios, the backrest assembly includes a backrest portion rotatably connected to the seat portion and a side connecting portion connected to the seat portion, a backrest adjustment mechanism provided between the backrest portion and the side connecting portion and configured to adjust a tilt angle of the backrest portion relative to the side connecting portion; the backrest locking mechanism is located between the side connecting portion and the seat portion.

According to the aforementioned child carrier capable of switching between multiple scenarios, the backrest adjustment mechanism includes a plurality of backrest adjustment holes provided on a side of the side connecting portion close to the backrest portion and a backrest adjustment pin slidably provided on the backrest portion and configured to insert into a corresponding backrest adjustment hole, an adjustment pin elastic member provided between the backrest adjustment pin and the backrest portion and configured to enable the backrest adjustment pin to elastically insert into the backrest adjustment hole.

According to the aforementioned child carrier capable of switching between multiple scenarios, the backrest adjustment mechanism further includes an adjustment release member movably provided on the backrest portion and configured to link an unlocking action of the backrest adjustment pin.

According to the aforementioned child carrier capable of switching between multiple scenarios, a handle assembly is further included, the handle assembly slidably provided on the side connecting portion, a handle adjustment locking mechanism provided between the handle assembly and the side connecting portion; a backrest blocking assembly provided on the handle assembly and configured to prevent the backrest portion from tilting backward relative to the side connecting portion for adjustment, a handle foolproof locking mechanism provided between the handle assembly and the side connecting portion and configured to lock the handle assembly relative to the side connecting portion in response to the backrest blocking assembly releasing the blocking of the backrest portion, and the handle foolproof locking mechanism configured to be linked and released by the backrest portion in response to the backrest portion tilting forward relative to the side connecting portion to a preset position.

According to the aforementioned child carrier capable of switching between multiple scenarios, the handle foolproof locking mechanism includes a handle foolproof locking hole provided on the handle assembly, and a handle foolproof locking pin slidably provided on the side connecting portion and insertable into the handle foolproof locking hole, a handle foolproof elastic member configured to enable the handle foolproof locking pin to be elastically inserted into the handle foolproof locking hole is provided between the handle foolproof locking pin and the side connecting portion; the handle foolproof locking pin is configured to be released being linked with the backrest portion in response to the backrest portion flipping forward relative to the side connecting portion to a preset position.

According to the aforementioned child carrier capable of switching between multiple scenarios, the support assembly includes a front leg assembly and a rear leg assembly, a middle portion of the front leg assembly is rotatably connected to the carrier body, an upper end of the front leg assembly is rotatably connected to an upper end of the rear leg assembly, a middle portion of the rear leg assembly is rotatably and slidably connected to the carrier body via a joint assembly, in the car seat use state of the child carrier, the front leg assembly and the rear leg assembly are both in abutment against the carrier body; in the stroller use state of the child carrier, the front leg assembly and the rear leg assembly are configured to support the ground after being connected to wheel assemblies.

According to the aforementioned child carrier capable of switching between multiple scenarios, the support assembly includes a front leg assembly and a rear leg assembly, a middle portion of the front leg assembly is rotatably connected to the carrier body, an upper end of the front leg assembly is rotatably connected to an upper end of the rear leg assembly, a middle portion of the rear leg assembly is rotatably and slidably connected to the carrier body via a joint assembly, the ISOFIX assembly is provided on the front leg assembly, in the car seat use state of the child carrier, the front leg assembly and the rear leg assembly are both in abutment against the carrier body; in the stroller use state of the child carrier, the front leg assembly and the rear leg assembly are configured to support the ground after being connected to wheel assemblies.

According to the aforementioned child carrier capable of switching between multiple scenarios, a front portion of the ISOFIX assembly is rotatably connected to a lower portion of the front leg assembly, a support rod is provided between the ISOFIX assembly and the front leg assembly, a lower end of the support rod is rotatably connected to a rear portion of the ISOFIX assembly , an upper end of the support rod is rotatably and slidably connected to the front leg assembly, and a support locking mechanism is provided between the upper end of the support rod and the front leg assembly.

According to the aforementioned child carrier capable of switching between multiple scenarios, the front leg assembly is provided with a front leg sliding groove extending along a length direction of the front leg assembly, and the upper end of the support rod is rotatably accommodated in the front leg sliding groove.

According to the aforementioned child carrier capable of switching between multiple scenarios, a use state locking mechanism is further included, the use state locking mechanism including a stroller state locking mechanism configured to lock the child carrier in the stroller use state and a car seat state locking mechanism configured to lock the child carrier in the car seat use state.

According to the aforementioned child carrier capable of switching between multiple scenarios, the the support assembly includes a front leg assembly and a rear leg assembly, a middle portion of the front leg assembly is rotatably connected to the carrier body, an upper end of the front leg assembly is rotatably connected to an upper end of the rear leg assembly, a middle portion of the rear leg assembly is rotatably and slidably connected to the carrier body via a joint assembly, the stroller state locking mechanism is located between the rear leg assembly and the carrier body, and the car seat state locking mechanism is located between the front leg assembly and the carrier body.

According to the aforementioned child carrier capable of switching between multiple scenarios, the stroller state locking mechanism includes a stroller state locking hole provided on the rear leg assembly, and a stroller state locking pin movably provided on the carrier body, the stroller state locking pin being insertable into the stroller state locking hole in response to the child carrier being in the stroller use state, and a locking pin elastic member configured to enable the stroller state locking pin to be elastically inserted into the stroller state locking hole is provided between the stroller state locking pin and the carrier body.

According to the aforementioned child carrier capable of switching between multiple scenarios, the car seat state locking mechanism includes a car seat state locking groove provided on the carrier body, and a car seat state locking cross bar provided on the front leg assembly, the car seat state locking cross bar being configured to be snap-fitted into the car seat state locking groove in response to the child carrier being in the car seat use state, a car seat state locking slider for locking the car seat state locking cross bar in the car seat state locking groove is slidably provided on the carrier body, and a locking slider elastic member is provided between the car seat state locking slider and the carrier body.

Compared with the prior art, the present application has the following advantages:
1. The present application may correspondingly switch the child carrier between a stroller use state and a car seat use state simply by operating the support assembly to switch between an unfolded state and a folded state, so that the child carrier may meet the use demands of different application scenarios, having the characteristics of rapid switching, convenient operation, multi-functionality, and strong applicability.
2. The present application has a stroller use state and a car seat use state that may be switched with each other, and a user, when going out by car, does not need to additionally equip a dedicated stroller frame, which may effectively reduce the number and weight of carried children's appliances, having the characteristic of facilitating travel; in response to being used with a car seat, a separate base is not additionally needed to be connected and used with the car seat, leading to convenient use.
3. In the car seat use state of the child carrier of the present application, the ISOFIX assembly is located at a lower side or an outer side of the support assembly, which may facilitate a user operating an ISOFIX joint of the ISOFIX assembly to cooperate with an ISOFIX connector on the car seat for use.
4. In the stroller use state, the angle at which the front leg assembly and the rear leg assembly unfold is pulled by the flexible connecting member, so that they have a stable spacing and form a stable triangular unfolding structure; and reinforcing cross bars are provided between two front leg assemblies and between two rear leg assemblies, so that they are more stable and reliable in the stroller use state.

### BRIEF DESCRIPTION OF THE DRAWINGS

The specific implementations of the present application are further described in detail below in conjunction with the accompanying drawings.
FIG. 1 is a first perspective view illustrating the present application in a stroller use state.
FIG. 2 is a second perspective view illustrating the present application in a stroller use state.
FIG. 3 is a side view illustrating the present application in a stroller use state.
FIG. 4 is a first side view of the present application during switching from the stroller use state to a folded storage state.
FIG. 5 is a second side view of the present application during switching from the stroller use state to the folded storage state.
FIG. 6 is a third side view of the present application during switching from the stroller use state to the folded storage state.
FIG. 7 is a fourth side view of the present application during switching from the stroller use state to the folded storage state.
FIG. 8 is a fifth side view of the present application during switching from the stroller use state to the folded storage state.
FIG. 9 is a perspective view illustrating the present application in the folded storage state.
FIG. 10 is a first cross-sectional view illustrating the present application in a stroller use state.
FIG. 11 is a second cross-sectional view illustrating the present application in a stroller use state.
FIG. 12 is a third cross-sectional view illustrating the present application in a stroller use state.
FIG. 13 is a cross-sectional view of a backrest adjustment mechanism in the present application.
FIG. 14 is a cross-sectional view illustrating a backrest blocking assembly blocking a backrest portion in the present application.
FIG. 15 is a cross-sectional view of a stroller state locking mechanism in the present application.
FIG. 16 is a cross-sectional view of a handle foolproof locking mechanism in the present application.
FIG. 17 is an exploded view of the present application.
FIG. 18 is a schematic diagram of a structure of a seat portion in the present application.
FIG. 19 is a first exploded view of a backrest assembly in the present application.
FIG. 20 is a second exploded view of the backrest assembly in the present application.
FIG. 21 is a schematic diagram of a structure of a handle assembly in the present application.
FIG. 22 is a schematic diagram illustrating a connection between an ISOFIX assembly and a front leg assembly in the present application.
FIG. 23 is a schematic diagram of structures of the ISOFIX assembly and the front leg assembly in the present application.
FIG. 24 is a first perspective view illustrating the present application in a car seat use state.
FIG. 25 is a second perspective view illustrating the present application in a car seat use state.
FIG. 26 is a first perspective view illustrating the present application in a towing use state.
FIG. 27 is a second perspective view illustrating the present application in a towing use state.
FIG. 28 is a perspective view illustrating the present application in a stroller use state, with the backrest portion flipped rearward relative to a side connecting portion to a preset angle.
FIG. 29 is a first perspective view illustrating another embodiment of the present application in a car seat use state.
FIG. 30 is a perspective view illustrating another embodiment of the present application in a stroller use state.
FIG. 31 is a second perspective view illustrating another embodiment of the present application in a car seat use state.

### DETAILED DESCRIPTION

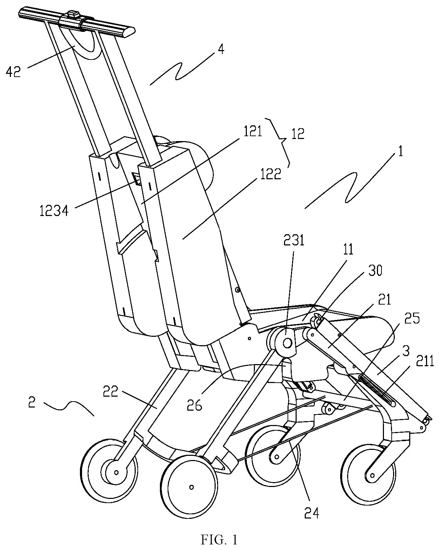

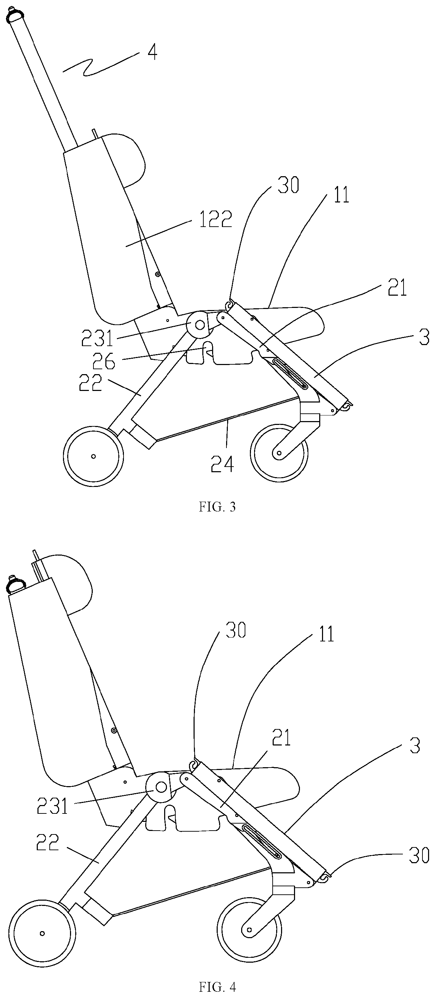

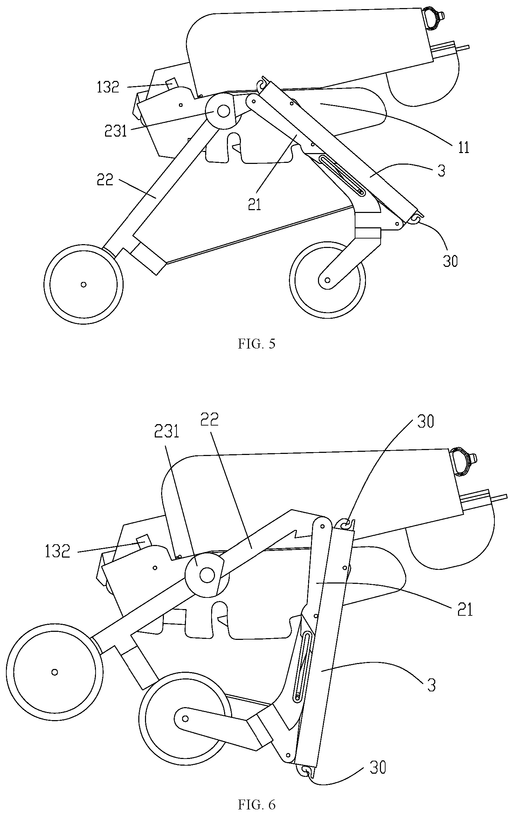

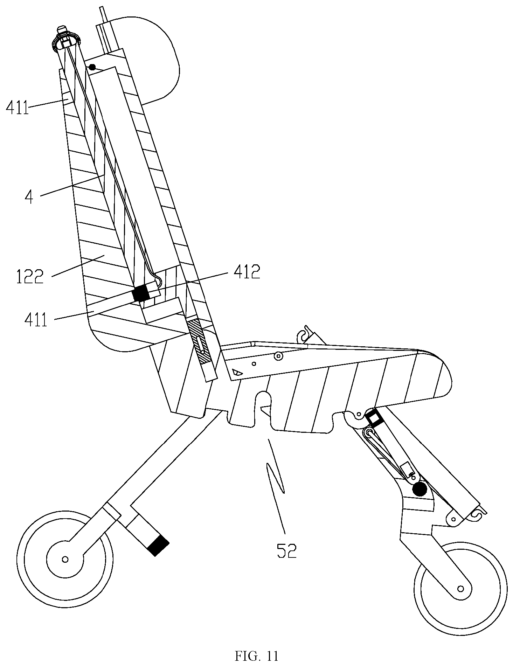

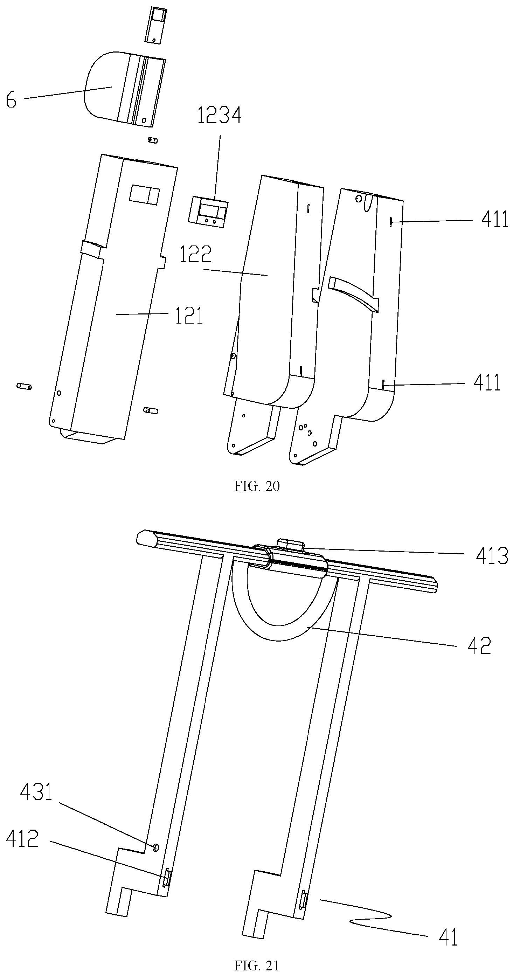

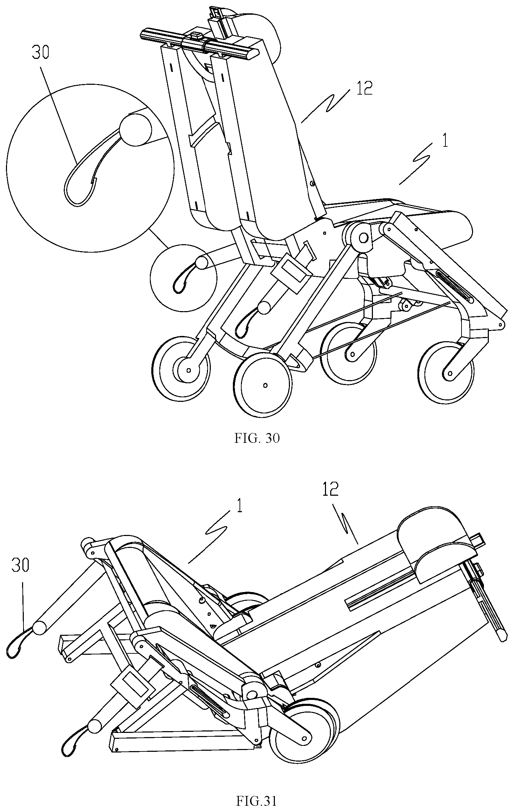

The implementations of the present application are described in detail below with reference to FIGS. 1 to 31.

As illustrated in FIGS. 1, 2, 17, and 22 to 26, the present application is a child carrier capable of switching between multiple scenarios, including a carrier body 1, a support assembly 2, and a connecting joint 30, the support assembly 2 being connected to the carrier body 1 and having an unfolded state and a folded state, the support assembly 2 switching between the unfolded state and the folded state so that the child carrier accordingly switches between a stroller use state and a car seat use state respectively, the child carrier being used as a baby stroller in the stroller use state, and the child carrier being configured to be connected to a car seat for use in the car seat use state; the connecting joint 30 is configured to cooperate with an international standards organization FIX (hereinafter referred to as ISOFIX) connector on the car seat for use in response to the child carrier being in the car seat use state. The present application only requires operating the support assembly to switch between the unfolded state and the folded state so that the child carrier may accordingly switch between the stroller use state and the car seat use state respectively, thus enabling the child carrier to meet usage requirements of different usage scenarios, having characteristics of fast switching, convenient operation, multi-functionality, and strong applicability; at the same time, when a user goes out by car, there is no need to additionally equip a dedicated stroller frame, effectively reducing the quantity and weight of child gear to carry, facilitating travel., and in response to being used with a car seat, the child carrier may be connected to the car seat for use without an additional independent base, leading to convenient use.

The car seat use state in the present application is a use state in which the child carrier of the present application is connected to a car seat.

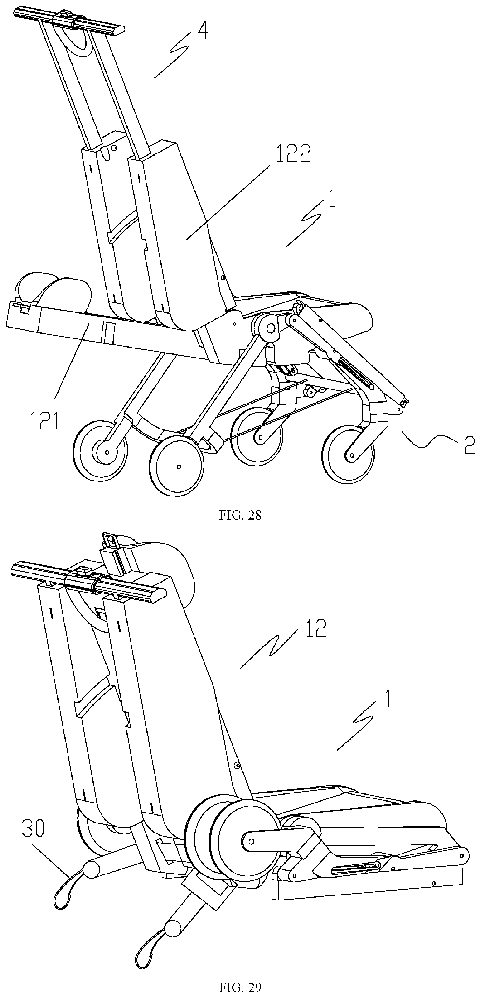

As shown in FIGS. 29 to 31, the connecting joint 30 is an ISOFIX joint or an elastic buckle, and the connecting joint 30 is connected to the carrier body 1 or the support assembly 2 through a connecting soft strap. The present embodiment is adapted to an American regulation use mode. In the case that the connecting joint 30 is an ISOFIX joint, an ISOFIX connector on the car seat is an ISOFIX socket configured to be matched and connected to the ISOFIX joint; in the case that the connecting joint 30 is an elastic buckle, the ISOFIX connector on the car seat is an ISOFIX anchor point, and the elastic buckle may automatically elastically close to be connected to the ISOFIX anchor point of the car seat.

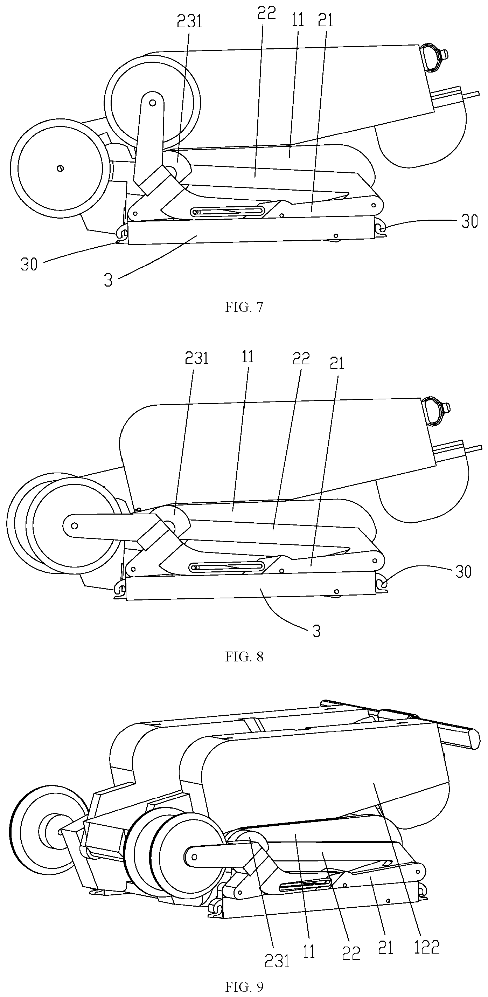

As shown in FIGS. 7 to 9, the present application further includes an ISOFIX assembly 3, the ISOFIX assembly 3 is provided on the support assembly 2 or the carrier body 1, and the connecting joint 30 is an ISOFIX joint and is provided on the ISOFIX assembly 3. The present embodiment is adapted to a European regulation use mode. In the present embodiment, the ISOFIX connector on the car seat is an ISOFIX socket configured to be matched and connected to the ISOFIX joint.

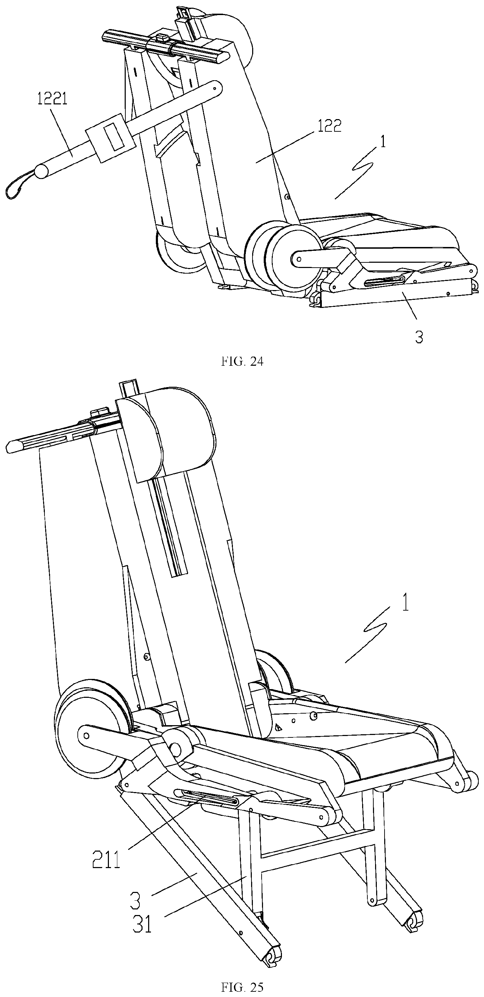

As shown in FIGS. 7 to 9, the ISOFIX assembly 3 is provided on the support assembly 2, and in the car seat use state, the ISOFIX assembly 3 is located on a lower side or an outer side of the support assembly 2; in the stroller use state of the child carrier, the support assembly 2 drives the ISOFIX assembly 3 to unfold relative to the carrier body 1, and the ISOFIX assembly 3 remains folded and connected to the support assembly 2; in the car seat use state of the child carrier, the ISOFIX assembly 3 may be folded or unfolded relative to the support assembly 2 so that the connecting joint 30 is used in cooperation with the ISOFIX connector on the car seat. As shown in FIGS. 24 and 25, in the car seat use state, the support assembly is in a folded state relative to the carrier body, that is, the front leg assembly and the rear leg assembly correspondingly abut against a side of the carrier body, which may improve the space utilization rate in the vehicle and improve the safety of riding in the vehicle; as shown in FIGS. 1 to 3, in the stroller use state, the front leg assembly and the rear leg assembly are unfolded and supported on the ground, facilitating pushing, and the switching process of the child carrier is convenient and easy to operate.

For the specific structures of the ISOFIX assembly 3 and the connecting joint 30, reference may be made to: Chinese Patent Application No. CN201910001404.5, entitled ISOFIX connecting assembly and safety seat, Chinese Patent Application No. CN202120139175.6, entitled ISOFIX connecting assembly and safety seat, etc.

As shown in FIGS. 1 to 9, 17 to 20, for convenient folding and unfolding, the carrier body 1 has a seat portion 11 and a backrest assembly 12, the backrest assembly 12 is rotatably connected to the seat portion 11, and a backrest locking mechanism 13 is provided between the backrest assembly 12 and the seat portion 11 for locking the backrest assembly 12 relative to the seat portion 11 in response to the backrest assembly 12 flipping backward relative to the seat portion 11 to a preset angle.

As shown in FIGS. 7 to 9, the child carrier further has a folded storage state, in the folded storage state of the child carrier, a front surface of the backrest assembly 12 faces an upper surface of the seat portion 11 and forms an acute angle or is parallel, and the support assembly 2 is in a folded state, which may minimize the volume of the child carrier in the folded storage state, facilitating carrying and storage. In the present embodiment, in the folded storage state, the backrest assembly 12 and the seat portion are locked by a backrest folding locking assembly to lock the backrest assembly 12 relative to the seat portion 11, and the backrest folding locking assembly may be a stroller hook provided on the seat portion 11 for hooking on the backrest assembly 12.

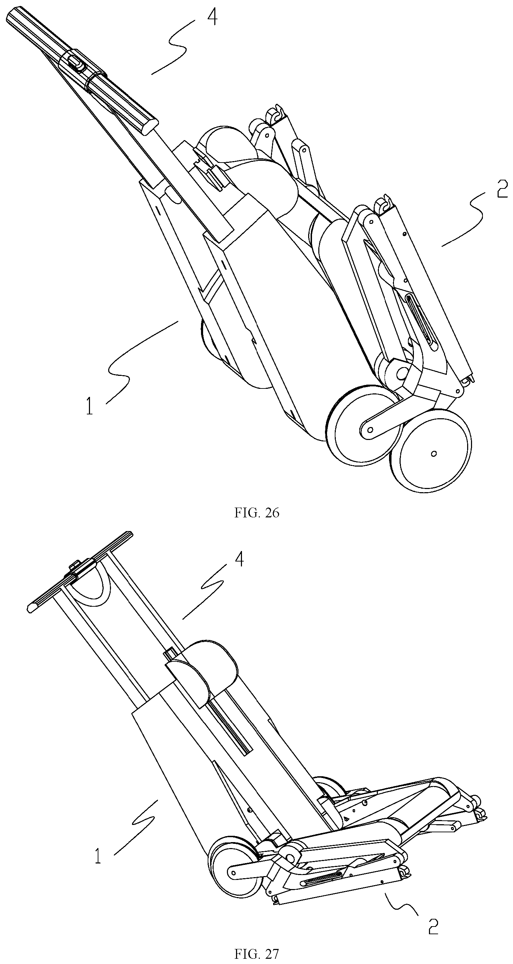

As shown in FIGS. 26 and 27, the child carrier further has a towing use state, in the towing use state of the child carrier, the front surface of the backrest assembly 12 faces the upper surface of the seat portion 11, and forms an acute angle or is parallel, and the support assembly 2 is in a folded state, facilitating towing use. As shown in FIG. 26, in the towing use state of the child carrier, the front surface of the backrest assembly 12 abuts against the upper surface of the seat portion 11, the support assembly 2 is in a folded state, and the handle assembly 4 extends relative to the backrest assembly 12. As shown in FIG. 27, in the towing use state of the child carrier, the backrest assembly 12 is flipped and unfolded relative to the seat portion 11, the support assembly 2 is in a folded state, and the handle assembly 4 extends relative to the backrest assembly 12.

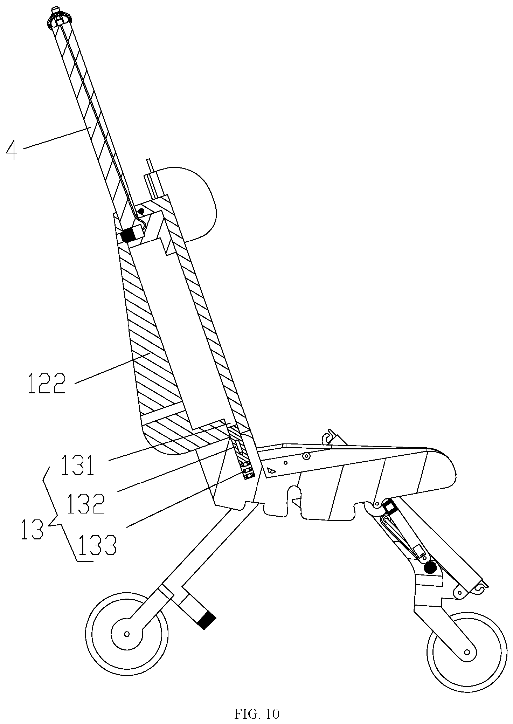

As shown in FIGS. 10 to 12, 17 and 18, for better locking the backrest assembly relative to the seat portion, the backrest locking mechanism 13 includes a backrest locking hole 131 provided on the backrest assembly 12 and a backrest locking block 132 slidably provided on the seat portion 11 and capable of being inserted into the backrest locking hole 131 in response to the backrest assembly 12 flipping backward relative to the seat portion 11 to a preset angle, and a locking slider elastic member 133 capable of causing the backrest locking block 132 to be elastically inserted into the backrest locking hole 131 is provided between the backrest locking block 132 and the seat portion 11.

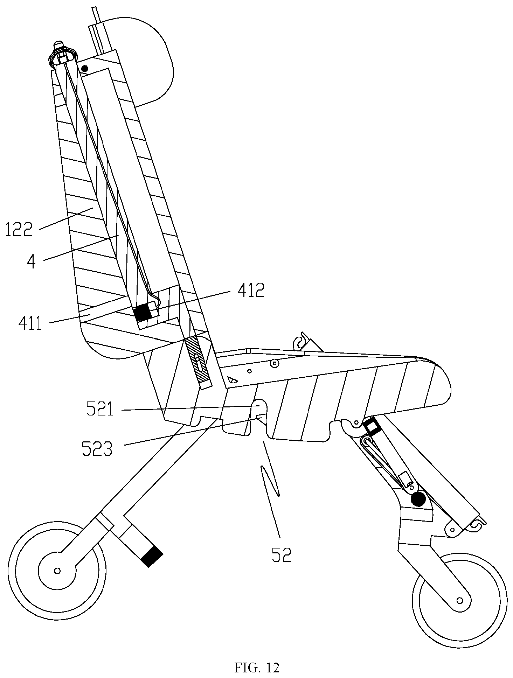

As shown in FIGS. 10 to 12, to achieve linked release for convenient unlocking operation, the child carrier further includes a handle assembly 4, the handle assembly 4 is slidably provided on the backrest assembly 12, and the backrest locking mechanism 13 is configured to be linked and released by the handle assembly 4 in response to the handle assembly 4 sliding to a preset position relative to the backrest assembly 12. In the present embodiment, during a process of operating the handle assembly 4 to slide downward relative to the backrest assembly 12, a lower end portion of the handle assembly 4 presses the backrest locking block 132 to slide downward so that a locking end of the backrest locking block 132 retreats from the backrest locking hole 131, as shown in FIG. 12, thereby releasing a locked state of the backrest assembly relative to the seat portion, and then the backrest assembly may be operated to flip and fold toward a side of the seat portion.

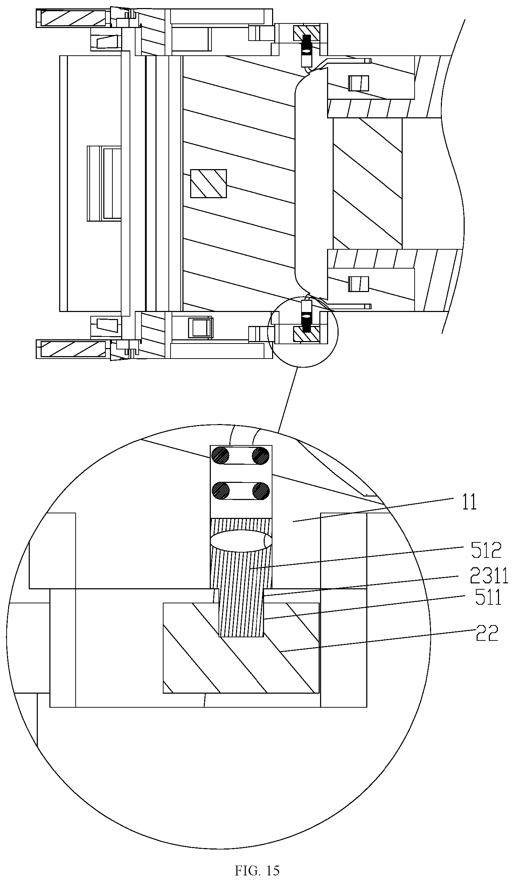

As shown in FIGS. 15, 17, and 18, to achieve linked releasing for convenient unlocking operation, further included is a use state locking mechanism 5, the use state locking mechanism 5 is correspondingly configured to lock the child carrier in a stroller use state or a car seat use state, and the use state locking mechanism 5 is configured to be linked and released by the backrest assembly 12 in response to the backrest assembly 12 flipping forward relative to the seat portion 11 to a preset angle. In this embodiment, during the flipping of the backrest assembly toward a side of the seat portion, the backrest assembly 12 links the stroller state locking mechanism 51 of the use state locking mechanism 5 for releasing, thus the user is not required to separately operate a release mechanism to release the stroller state locking mechanism 51, thereby enabling the unfolded front leg assembly 21 and rear leg assembly 22 to be folded, rapidly switching the child carrier from the stroller use state to the car seat use state.

As shown in FIGS. 1, 2, and 17 to 20, the backrest assembly 12 includes a backrest portion 121 rotatably connected to the seat portion 11 and a side connecting portion 122 connected to the seat portion 11, a backrest adjustment mechanism 123 for adjusting a tilt angle of the backrest portion 121 relative to the side connecting portion 122 is provided between the backrest portion 121 and the side connecting portion 122, capable of adjusting the backrest portion 121 relative to the side connecting portion 122 to use states of different angles, i. E., adjusting an opening and closing angle between the backrest portion 121 and the seat portion 11, providing a user with multiple use postures, and improving the user's use experience. In this embodiment, the opening and closing angle between the backrest assembly 12 and the seat portion 11 is 0 to 98°, and the opening and closing angle between the backrest portion 121 and the seat portion 11 is 0 to 158°.

As shown in FIGS. 10 to 12, in this embodiment, the backrest locking mechanism 13 is located between the side connecting portion 122 and the seat portion 11.

As shown in FIG. 24, an upper pull strap 1221 is connected to a side wall of the backrest assembly 12, facilitating the user's operation of flipping and unfolding or folding the backrest assembly relative to the seat portion by pulling the upper pull strap 1221.

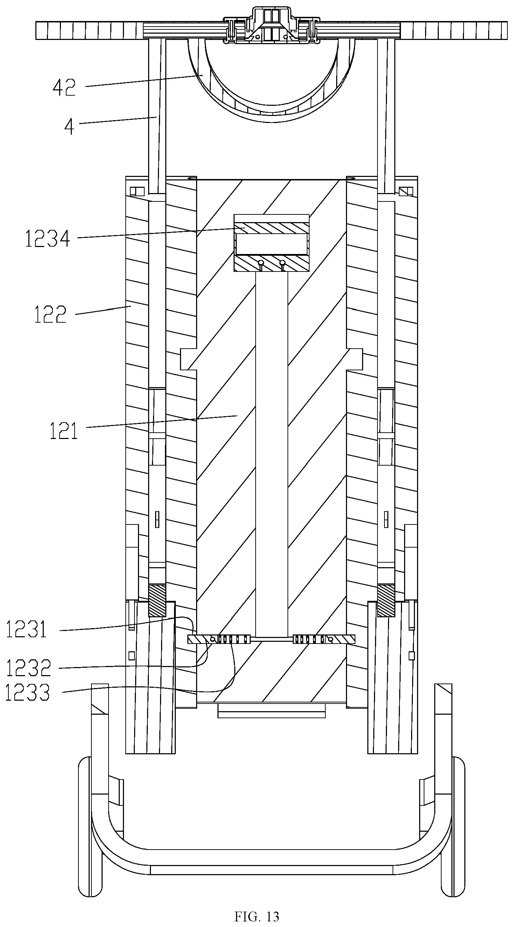

As shown in FIGS. 13, 19, and 20, the backrest adjustment mechanism 123 includes a plurality of backrest adjustment holes 1231 provided on a side of the side connecting portion 122 close to the backrest portion 121, and a backrest adjustment pin 1232 slidably provided on the backrest portion 121 and insertable into a corresponding backrest adjustment hole 1231, an adjustment pin elastic member 1233 capable of enabling the backrest adjustment pin 1232 to be elastically inserted into the backrest adjustment hole 1231 is provided between the backrest adjustment pin 1232 and the backrest portion 121, and the backrest adjustment mechanism 123 further includes an adjustment release member 1234 movably provided on the backrest portion 121 for linking an unlocking action of the backrest adjustment pin 1232. In this embodiment, the adjustment release member 1234 is connected to the backrest adjustment pin 1232 via a linkage pull cord, and a backrest groove/passage for the linkage pull cord to pass through is provided on the backrest portion 121, as shown in FIG. 13. When the tilt angle of the backrest portion 121 needs to be adjusted, the user operates the adjustment release member 1234 to slide upward relative to the backrest portion 121, then the linkage pull cord drives the backrest adjustment pin 1232 to slide laterally relative to the backrest portion 121, causing the backrest adjustment pin 1232 to withdraw from the backrest adjustment hole 1231, upon flipping the backrest portion 121 to a desired angle, the adjustment release member 1234 is released, and the adjustment pin elastic member 1233 causes the backrest adjustment pin 1232 to slide and reset and insert into the corresponding backrest adjustment hole 1231, thereby maintaining the backrest portion 121 at the desired angle.

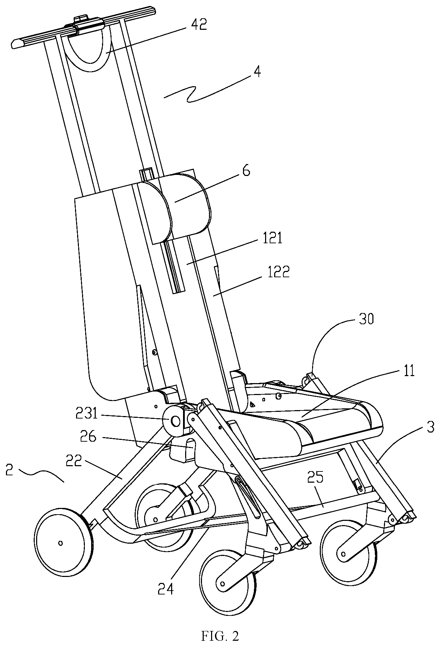

As shown in FIGS. 2, 17, 19, and 20, a headrest portion 6 capable of vertically movably adjusting relative to the backrest portion 121 is provided at a front side of the backrest portion 121, a headrest adjustment locking mechanism 61 is provided between the headrest portion 6 and the backrest portion 121, the headrest adjustment locking mechanism 61 includes headrest adjustment locking holes 611 vertically spaced apart on the backrest portion 121 and a headrest adjustment locking pin 612 slidably provided on the headrest portion 6 and insertable into a corresponding headrest adjustment locking hole 611, a headrest adjustment elastic member capable of enabling the headrest adjustment locking pin 612 to be elastically inserted into the headrest adjustment locking hole 611 is provided between the headrest adjustment locking pin 612 and the headrest portion 6. For convenient unlocking, a headrest pull handle for linking an unlocking action of the headrest adjustment locking pin 612 is provided on the headrest portion 6, the headrest adjustment locking pin 612 is caused to withdraw from the headrest adjustment locking hole 611 by pulling the headrest pull handle, and when the headrest portion 6 is adjusted to a desired position, the headrest pull handle is released, and the headrest adjustment elastic member causes the headrest adjustment locking pin 612 to insert into the corresponding headrest adjustment locking hole 611 to lock the headrest portion 6.

In this embodiment, a headrest sliding groove for limiting a vertical movement direction of the headrest portion 6 and guiding the movement of the headrest portion 6 is provided at the front side of the backrest portion 121, enabling the headrest portion 6 to slide stably and smoothly along a set direction.

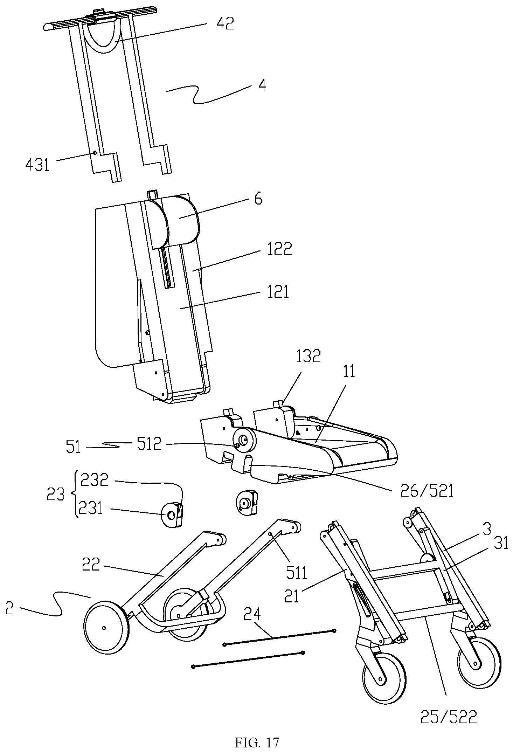

As shown in FIGS. 17, 20, and 21, further included is a handle assembly 4, the handle assembly 4 is slidably provided on the side connecting portion 122, a handle adjustment locking mechanism 41 is provided between the handle assembly 4 and the side connecting portion 122, where a sliding slot hole for the handle assembly 4 to slide therein is provided on the side connecting portion 122. In this embodiment, the handle adjustment locking mechanism 41 includes a plurality of handle adjustment locking holes 411 vertically spaced apart on the side connecting portion 122 and a handle adjustment locking block 412 slidably provided on the handle assembly 4 and insertable into a corresponding handle adjustment locking hole 411, an adjustment locking block elastic member capable of enabling the handle adjustment locking block 412 to be elastically inserted into the handle adjustment locking hole 411 is provided between the handle adjustment locking block 412 and the handle assembly 4, and a handle adjustment release button 413 for linking an unlocking action of the handle adjustment locking block 412 is further provided on the handle assembly 4. During adjustment and releasing, the user presses the handle adjustment release button 413 to link the handle adjustment locking block 412 to slide relative to the handle assembly 4, causing a locking end of the handle adjustment locking block 412 to withdraw from the handle adjustment locking hole 411, at this moment, the handle assembly 4 may be operated to slide upward or downward relative to the side connecting portion 122, and when adjusted to a desired position, the handle adjustment release button 413 is released, and the adjustment locking block elastic member causes the locking end of the adjustment locking block 412 to insert into the corresponding handle adjustment locking hole 411.

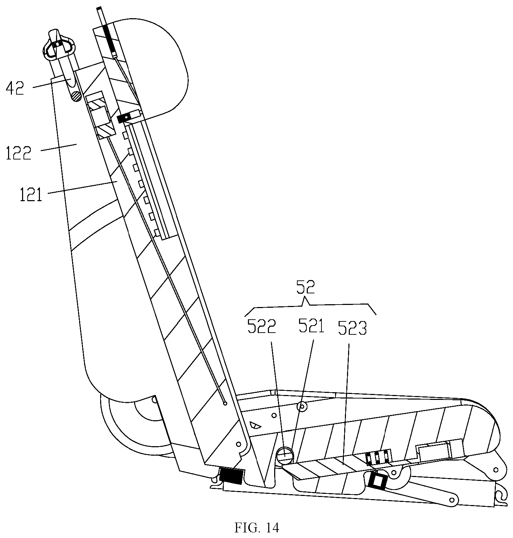

As shown in FIGS. 14, 16, 19 and 21, the handle assembly 4 is provided with a backrest blocking assembly 42 capable of preventing the backrest portion 121 from flipping backward and adjusting relative to the side connecting portion 122, a handle foolproof locking mechanism 43 configured to lock the handle assembly 4 relative to the side connecting portion 122 in response to the backrest blocking assembly 42 releasing the blocking of the backrest portion 121 is provided between the handle assembly 4 and the side connecting portion 122, and the handle foolproof locking mechanism 43 is configured to be linked and released by the backrest portion 121 in response to the backrest portion 121 flipping forward relative to the side connecting portion 122 to a preset position. In the present embodiment, in response to the handle assembly 4 not being pulled out so that the backrest blocking assembly 42 blocks and cooperates with the backrest portion 121, the backrest portion 121 may not flip backward and adjust relative to the side connecting portion 122, and the backrest assembly 12 and the seat portion 11 may only achieve an opening and closing angle of 0 to 98°, as shown in FIGS. 1 and 2; in response to the handle assembly 4 being pulled out so that the backrest blocking assembly 42 removes the blocking of the backrest portion 121, the backrest portion 121 of the backrest assembly 12 may flip backward relative to the side connecting portion 122, that is, the backrest portion 121 of the backrest assembly 12 and the seat portion 11 may achieve an opening and closing angle of 0 to 158°, as shown in FIG. 28.

In the present embodiment, through the cooperative use of the backrest blocking assembly 42 and the handle foolproof locking mechanism 43, the handle assembly 4 and the backrest portion 121 achieve an interlocking function, ensuring use reliability.

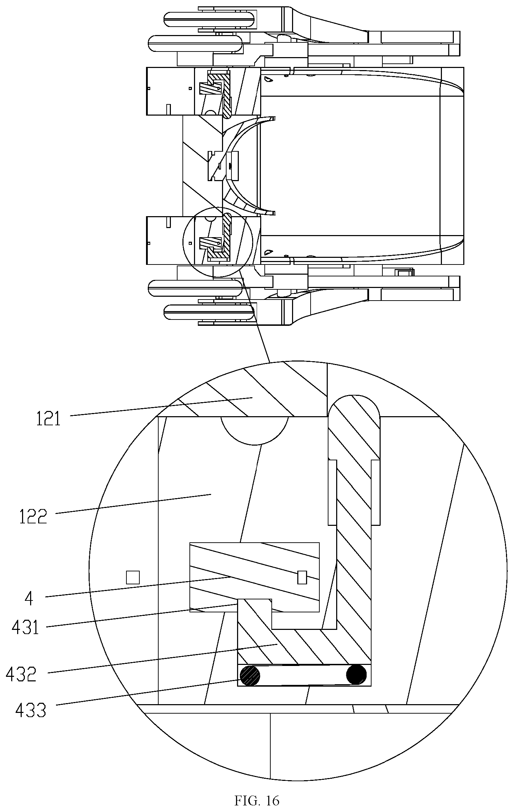

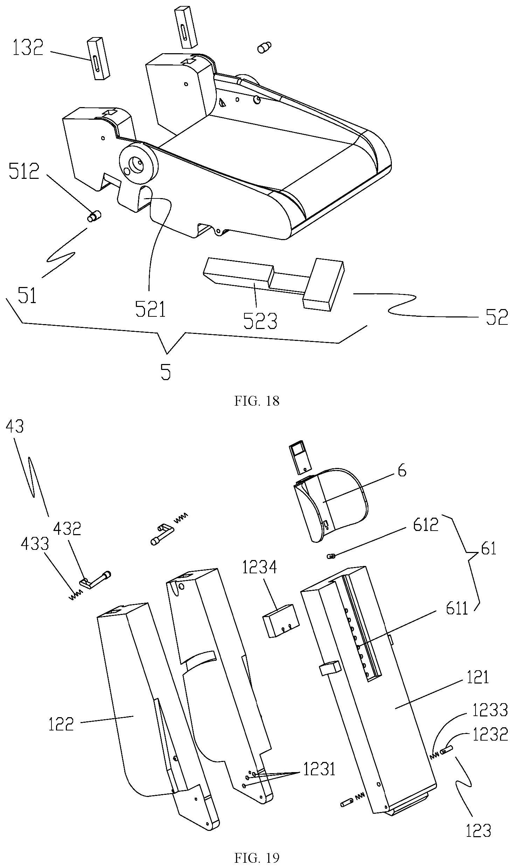

As shown in FIGS. 16 and 19, the handle foolproof locking mechanism 43 includes a handle foolproof locking hole 431 provided on the handle assembly 4 and a handle foolproof locking pin 432 slidably provided on the side connecting portion 122 and capable of being inserted into the handle foolproof locking hole 431, and a handle foolproof elastic member 433 capable of elastically inserting the handle foolproof locking pin 432 into the handle foolproof locking hole 431 is provided between the handle foolproof locking pin 432 and the side connecting portion 122; the handle foolproof locking pin 432 is configured to be linked and released by the backrest portion 121 in response to the backrest portion 121 flipping forward relative to the side connecting portion 122 to a preset position. In response to adjusting the backrest portion 121 to flip backward relative to the side connecting portion 122, the handle assembly 4 must first be operated to slide upward relative to the side connecting portion 122, so that the backrest blocking assembly 42 removes the blocking of the backrest portion 121, and meanwhile the handle foolproof locking pin 432 is inserted into the handle foolproof locking hole 431 to lock the handle assembly 4, as shown in FIGS. 1 and 2, and at this moment the user may operate the backrest portion 121 to flip backward relative to the side connecting portion 122, thereby flipping within 98° to 158°, as shown in FIG. 28; in response to the need to operate the handle assembly 4 to retract toward the side connecting portion 122, the backrest portion 121 needs to be first operated to flip forward relative to the side connecting portion 122 to the preset position, and the backrest portion 121 links the handle foolproof locking pin 432 to perform an unlocking action, thereby releasing the locking of the handle assembly 4 by the handle foolproof locking mechanism 43.

As shown in FIGS. 1, 2 and 17, in order to better fold or unfold the support assembly and improve the switching efficiency, the support assembly 2 includes a front leg assembly 21 and a rear leg assembly 22, a middle portion of the front leg assembly 21 is rotatably connected to the carrier body 1, an upper end of the front leg assembly 21 is rotatably connected to an upper end of the rear leg assembly 22, a middle portion of the rear leg assembly 22 is rotatably and slidably connected to the carrier body 1 via a joint assembly 23, the ISOFIX assembly 3 is provided on the front leg assembly 21, and in the car seat use state of the child carrier, both the front leg assembly 21 and the rear leg assembly 22 abut against the carrier body 1; in the stroller use state of the child carrier, the front leg assembly 21 and the rear leg assembly 22 are configured to support the ground after being connected to wheel sets; where, the joint assembly 23 includes a joint base 231 rotatably provided on the carrier body 1, and the joint base 231 is provided with a guide slot hole 232 for the rear leg assembly 22 to slide therein. In the present embodiment, the rear leg assembly 22 is connected through the joint assembly and the guide slot hole 232 in a cooperative manner, and the rear leg assembly 22 slides relative to the joint base 231 while rotating, so that the rear leg assembly and the front leg assembly may be quickly and efficiently linked and cooperatively folded to the car seat use state or unfolded to the stroller use state, and when in the car seat use state, both the front leg assembly and the rear leg assembly correspondingly abut against the seat portion side, and since such folding and unfolding may be achieved without additionally adding other connecting rods, the folding volume is minimized and the overall weight is minimized.

As shown in FIGS. 1 to 4, a flexible connecting member 24 is provided between the front leg assembly 21 and the rear leg assembly 22, and the flexible connecting member 24 is pulled taut and tightened in the stroller use state to limit the distance between the front leg assembly 21 and the rear leg assembly 22. In the stroller use state, the flexible connecting member pulls the front leg assembly and the rear leg assembly to an unfolded angle, so that they have a stable distance and form a stable triangular unfolded structure.

As shown in FIGS. 1 and 2, in order to further improve the structural strength and stability of the child carrier, a reinforcing cross bar 25 is provided between the two front leg assemblies 21 and between the two rear leg assemblies 22.

As shown in FIGS. 1 to 12, a relief structure 26 configured to avoid each other in the car seat use state is correspondingly provided on the reinforcing cross bar 25 or on the bottom of the carrier body 1, which may make the front leg assembly and the rear leg assembly more closely abut against the carrier body in the folded storage state of the child carrier, making the overall volume of the child carrier smaller and facilitating storage. In the present embodiment, the relief structure 26 includes a receiving groove provided on the bottom of the seat portion 11 for receiving the reinforcing cross bar 25, and in the car seat use state, the reinforcing cross bar 25 is folded into the receiving groove, and at this moment the reinforcing cross bar 25 may be used as a reinforcing structure of the carrier body, improving the structural strength and stability of the carrier body. In some implementations, the reinforcing cross bar 25 provided between the two rear leg assemblies 22 or between the two front leg assemblies 21 adopts a U-shaped structure, the U-shaped structure correspondingly cooperates with a receiving groove, and the receiving groove may be designed not too deep to avoid affecting the structural strength or design of the carrier body.

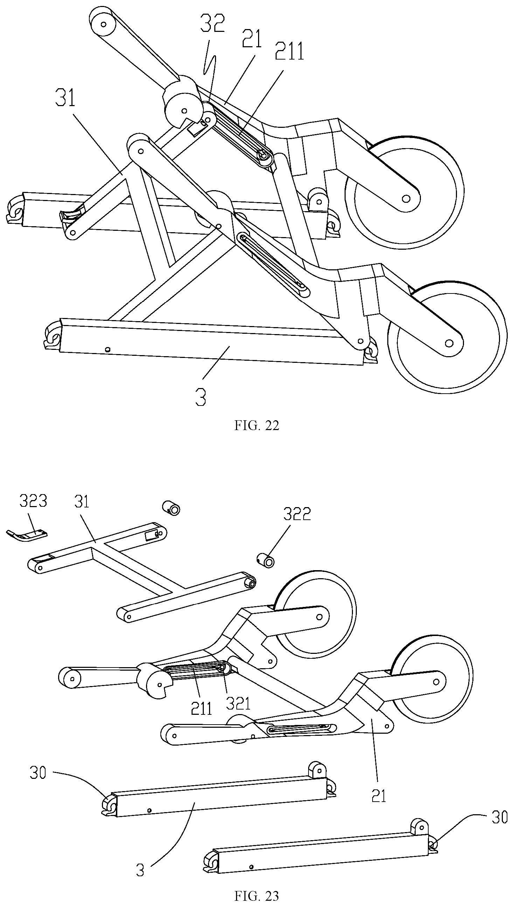

As shown in FIGS. 22 to 25, a front portion of the ISOFIX assembly 3 is rotatably connected to a lower portion of the front leg assembly 21, a support rod 31 is provided between the ISOFIX assembly 3 and the front leg assembly 21, a lower end of the support rod 31 is rotatably connected to a rear portion of the ISOFIX assembly 3, an upper end of the support rod 31 is rotatably and slidably connected to the front leg assembly 21, and a support locking mechanism 32 is provided between the upper end of the support rod 31 and the front leg assembly 21. In a car seat use state, by operating the upper end of the support rod 31 to cooperatively connect with the front leg assembly 21, the ISOFIX assembly 3 may be adjusted to be folded or unfolded relative to the support assembly 2 for use, so as to meet different seating requirements or application scenarios.

As shown in FIGS. 23 and 25, the front leg assembly 21 is provided with a front leg sliding groove 211 extending along a length direction of the front leg assembly 21, and the upper end of the support rod 31 is rotatably placed in the front leg sliding groove 211. In this embodiment, the front leg sliding groove 211 may limit and guide the upper end of the support rod 31, ensuring that the upper end of the support rod 31 may only slide along a set direction.

As shown in FIGS. 22 to 25, the support locking mechanism 32 is correspondingly configured to lock the upper end of the support rod relative to the front leg assembly 21 in response to the ISOFIX assembly 3 being folded or unfolded relative to the support assembly 2. The support locking mechanism 32 includes two support locking protrusions 321 provided at intervals on the front leg sliding groove 211 and respectively communicating with two ends of the front leg sliding groove 211, and a support locking sleeve 322 slidably provided at the upper end of the support rod 31 and capable of being fitted over a corresponding support locking protrusion 321 in response to the ISOFIX assembly 3 being folded or unfolded relative to the support assembly 2, and the support rod 31 is provided with a locking sleeve release member 323 for linking an unlocking action of the support locking sleeve 322.

As shown in FIGS. 17 and 18, the use state locking mechanism 5 includes a stroller state locking mechanism 51 for locking the child carrier in a stroller use state and a car seat state locking mechanism 52 for locking the child carrier in a car seat use state; the support assembly 2 includes a front leg assembly 21 and a rear leg assembly 22, a middle portion of the front leg assembly 21 is rotatably connected to the carrier body 1, an upper end of the front leg assembly 21 is rotatably connected to an upper end of the rear leg assembly 22, a middle portion of the rear leg assembly 22 is rotatably and slidably connected to the carrier body 1 via a joint assembly 23, the stroller state locking mechanism 51 is located between the rear leg assembly 22 and the carrier body 1, and the car seat state locking mechanism 52 is located between the front leg assembly 21 and the carrier body 1. In this embodiment, the stroller state locking mechanism 51 and the car seat state locking mechanism 52 are arranged independently of each other, capable of better locking the child carrier in a corresponding use state, safe and reliable.

As shown in FIGS. 15, 17, and 18, in order to better lock the child carrier, the stroller state locking mechanism 51 includes a stroller state locking hole 511 provided on the rear leg assembly 22 and a stroller state locking pin 512 movably provided on the carrier body 1 and capable of being inserted into the stroller state locking hole 511 in response to the child carrier being in the stroller use state, and a locking pin elastic member capable of enabling the stroller state locking pin 512 to be elastically inserted into the stroller state locking hole 511 is provided between the stroller state locking pin 512 and the carrier body 1. In this embodiment, in the stroller use state, a locking end of the stroller state locking pin 512 simultaneously passes through a joint locking hole 2311 of a joint base 231 and the stroller state locking hole 511, thereby limiting the rear leg assembly 22 from sliding relative to the joint base 231 or the carrier body 1 while limiting the joint base 231 from rotating relative to the carrier body 1.

As shown in FIGS. 14, 17, and 18, in order to better lock the child carrier, the car seat state locking mechanism 52 includes a car seat state locking groove 521 provided on the carrier body 1 and a car seat state locking cross bar 522 provided on the front leg assembly 21 and capable of engaging into the car seat state locking groove 521 in response to the child carrier being in the car seat use state, a car seat state locking slider 523 for locking the car seat state locking cross bar 522 in the car seat state locking groove 521 is slidably provided on the carrier body 1, and a locking slider elastic member is provided between the car seat state locking slider 523 and the carrier body 1.

## Claims

1. A child carrier capable of switching between multiple scenarios, comprising:
a carrier body (1), the carrier body (1) having a seat portion (11) and a backrest assembly (12), the backrest assembly (12) rotatably connected to the seat portion (11), a backrest locking mechanism (13) provided between the backrest assembly (12) and the seat portion (11) and configured to lock the backrest assembly (12) relative to the seat portion (11) in response to the backrest assembly (12) tilting backward relative to the seat portion (11) to a preset angle;
a support assembly (2), the support assembly (2) connected to the carrier body (1) and having an unfolded state and a folded state, the support assembly (2) switched between the unfolded state and the folded state to correspondingly switch the child carrier between a stroller use state and a car seat use state, respectively, the child carrier used as a baby stroller in the stroller use state, and the child carrier used for connection to a car seat in the car seat use state;
a connecting joint (30), the connecting joint (30) connected to the carrier body (1) or the support assembly (2), the connecting joint (30) configured to cooperate with an international standards organization FIX (ISOFIX) assembly connector on the car seat in response to the child carrier being in the car seat use state;
the child carrier further having a folded storage state, in the folded storage state, a front surface of the backrest assembly (12) and an upper surface of the seat portion (11) facing each other and forming an acute angle or being parallel, and the support assembly (2) being in the folded state.

2. The child carrier capable of switching between multiple scenarios according to claim 1, wherein the connecting joint (30) is an ISOFIX assembly joint or an elastic buckle, the connecting joint (30) connected to the carrier body (1) or the support assembly (2) via a connecting soft strap.

3. The child carrier capable of switching between multiple scenarios according to claim 1, further comprising an ISOFIX assembly (3), the ISOFIX assembly (3) provided on the support assembly (2) or the carrier body (1), the connecting joint (30) being an ISOFIX assembly joint and provided on the ISOFIX assembly (3).

4. The child carrier capable of switching between multiple scenarios according to claim 3, wherein the ISOFIX assembly (3) is provided on the support assembly (2), and in the car seat use state, the ISOFIX assembly (3) is located on a lower side or an outer side of the support assembly (2); in the stroller use state, the support assembly (2) drives the ISOFIX assembly (3) to unfold relative to the carrier body (1) and the ISOFIX assembly (3) remains folded and connected to the support assembly (2); in the car seat use state, the ISOFIX assembly (3) is foldable or unfoldable relative to the support assembly (2) to enable the connecting joint (30) to cooperate with the ISOFIX assembly connector on the car seat.

5. The child carrier capable of switching between multiple scenarios according to claim 1, wherein the backrest locking mechanism (13) comprises a backrest locking hole (131) provided on the backrest assembly (12) and a backrest locking block (132) slidably provided on the seat portion (11), the backrest locking block (132) being configured to insert into the backrest locking hole (131) in response to the backrest assembly (12) tilting backward relative to the seat portion (11) to the preset angle, a locking slider elastic member (133) being provided between the backrest locking block (132) and the seat portion (11) and configured to enable the backrest locking block (132) to elastically insert into the backrest locking hole (131).

6. The child carrier capable of switching between multiple scenarios according to claim 1, further comprising a handle assembly (4), the handle assembly (4) slidably provided on the backrest assembly (12), the backrest locking mechanism (13) configured to be linked and released by the handle assembly (4) in response to the handle assembly (4) sliding relative to the backrest assembly (12) to a preset position.

7. The child carrier capable of switching between multiple scenarios according to claim 1, further comprising a use state locking mechanism (5), the use state locking mechanism (5) correspondingly configured to lock the child carrier in the stroller use state or the car seat use state, and the use state locking mechanism (5) configured to be linked and released by the backrest assembly (12) in response to the backrest assembly (12) tilting forward relative to the seat portion (11) to a preset angle.

8. The child carrier capable of switching between multiple scenarios according to claim 1, wherein the backrest assembly (12) comprises a backrest portion (121) rotatably connected to the seat portion (11) and a side connecting portion (122) connected to the seat portion (11), a backrest adjustment mechanism (123) provided between the backrest portion (121) and the side connecting portion (122) and configured to adjust a tilt angle of the backrest portion (121) relative to the side connecting portion (122); the backrest locking mechanism (13) is located between the side connecting portion (122) and the seat portion (11).

9. The child carrier capable of switching between multiple scenarios according to claim 8, wherein the backrest adjustment mechanism (123) comprises a plurality of backrest adjustment hole (1231)s provided on a side of the side connecting portion (122) close to the backrest portion (121) and a backrest adjustment pin (1232) slidably provided on the backrest portion (121) and configured to insert into a corresponding backrest adjustment hole (1231), an adjustment pin elastic member (1233) provided between the backrest adjustment pin (1232) and the backrest portion (121) and configured to enable the backrest adjustment pin (1232) to elastically insert into the backrest adjustment hole (1231).

10. The child carrier capable of switching between multiple scenarios according to claim 9, wherein the backrest adjustment mechanism (123) further comprises an adjustment release member (1234) movably provided on the backrest portion (121) and configured to link an unlocking action of the backrest adjustment pin (1232).

11. The child carrier capable of switching between multiple scenarios according to claim 8, further comprising a handle assembly (4), the handle assembly (4) slidably provided on the side connecting portion (122), a handle adjustment locking mechanism (41) provided between the handle assembly (4) and the side connecting portion (122); a backrest blocking assembly (42) provided on the handle assembly (4) and configured to prevent the backrest portion (121) from tilting backward relative to the side connecting portion (122) for adjustment, a handle foolproof locking mechanism (43) provided between the handle assembly (4) and the side connecting portion (122) and configured to lock the handle assembly (4) relative to the side connecting portion (122) in response to the backrest blocking assembly (42) releasing the blocking of the backrest portion (121), and the handle foolproof locking mechanism (43) configured to be linked and released by the backrest portion (121) in response to the backrest portion (121) tilting forward relative to the side connecting portion (122) to a preset position.

12. The child carrier capable of switching between multiple scenarios according to claim 11, wherein the handle foolproof locking mechanism (43) comprises a handle foolproof locking hole (431) provided on the handle assembly (4), and a handle foolproof locking pin (432) slidably provided on the side connecting portion (122) and insertable into the handle foolproof locking hole (431), a handle foolproof elastic member (433) configured to enable the handle foolproof locking pin (432) to be elastically inserted into the handle foolproof locking hole (431) is provided between the handle foolproof locking pin (432) and the side connecting portion (122); the handle foolproof locking pin (432) is configured to be released being linked with the backrest portion (121) in response to the backrest portion (121) flipping forward relative to the side connecting portion (122) to a preset position.

13. The child carrier capable of switching between multiple scenarios according to claim 1, wherein the support assembly (2) comprises a front leg assembly (21) and a rear leg assembly (22), a middle portion of the front leg assembly (21) is rotatably connected to the carrier body (1), an upper end of the front leg assembly (21) is rotatably connected to an upper end of the rear leg assembly (22), a middle portion of the rear leg assembly (22) is rotatably and slidably connected to the carrier body (1) via a joint assembly (23), in the car seat use state of the child carrier, the front leg assembly (21) and the rear leg assembly (22) are both in abutment against the carrier body (1); in the stroller use state of the child carrier, the front leg assembly (21) and the rear leg assembly (22) are configured to support the ground after being connected to wheel assemblies.

14. The child carrier capable of switching between multiple scenarios according to claim 3, wherein the support assembly (2) comprises a front leg assembly (21) and a rear leg assembly (22), a middle portion of the front leg assembly (21) is rotatably connected to the carrier body (1), an upper end of the front leg assembly (21) is rotatably connected to an upper end of the rear leg assembly (22), a middle portion of the rear leg assembly (22) is rotatably and slidably connected to the carrier body (1) via a joint assembly (23), the ISOFIX assembly (3) is provided on the front leg assembly (21), in the car seat use state of the child carrier, the front leg assembly (21) and the rear leg assembly (22) are both in abutment against the carrier body (1); in the stroller use state of the child carrier, the front leg assembly (21) and the rear leg assembly (22) are configured to support the ground after being connected to wheel assemblies.

15. The child carrier capable of switching between multiple scenarios according to claim 14, wherein a front portion of the ISOFIX assembly (3) is rotatably connected to a lower portion of the front leg assembly (21), a support rod (31) is provided between the ISOFIX assembly (3) and the front leg assembly (21), a lower end of the support rod (31) is rotatably connected to a rear portion of the ISOFIX assembly (3), an upper end of the support rod (31) is rotatably and slidably connected to the front leg assembly (21), and a support locking mechanism (32) is provided between the upper end of the support rod (31) and the front leg assembly (21).

16. The child carrier capable of switching between multiple scenarios according to claim 15, wherein the front leg assembly (21) is provided with a front leg sliding groove (211) extending along a length direction of the front leg assembly (21), and the upper end of the support rod (31) is rotatably accommodated in the front leg sliding groove (211).

17. The child carrier capable of switching between multiple scenarios according to claim 1, further comprising a use state locking mechanism (5), the use state locking mechanism (5) comprising a stroller state locking mechanism (51) configured to lock the child carrier in the stroller use state and a car seat state locking mechanism (52) configured to lock the child carrier in the car seat use state.

18. The child carrier capable of switching between multiple scenarios according to claim 17, wherein the support assembly (2) comprises a front leg assembly (21) and a rear leg assembly (22), a middle portion of the front leg assembly (21) is rotatably connected to the carrier body (1), an upper end of the front leg assembly (21) is rotatably connected to an upper end of the rear leg assembly (22), a middle portion of the rear leg assembly (22) is rotatably and slidably connected to the carrier body (1) via a joint assembly (23), the stroller state locking mechanism (51) is located between the rear leg assembly (22) and the carrier body (1), and the car seat state locking mechanism (52) is located between the front leg assembly (21) and the carrier body (1).

19. The child carrier capable of switching between multiple scenarios according to claim 18, wherein the stroller state locking mechanism (51) comprises a stroller state locking hole (511) provided on the rear leg assembly (22), and a stroller state locking pin (512) movably provided on the carrier body (1), the stroller state locking pin (512) configured to be inserted into the stroller state locking hole (511) in response to the child carrier being in the stroller use state, and a locking pin elastic member configured to enable the stroller state locking pin (512) to be elastically inserted into the stroller state locking hole (511) is provided between the stroller state locking pin (512) and the carrier body (1).

20. The child carrier capable of switching between multiple scenarios according to claim 19, wherein the car seat state locking mechanism (52) comprises: a car seat state locking groove (521) provided on the carrier body (1), and a car seat state locking cross bar (522) provided on the front leg assembly (21), the car seat state locking cross bar (522) being configured to be snap-fitted into the car seat state locking groove (521) in response to the child carrier being in the car seat use state; a car seat state locking slider (523) for locking the car seat state locking cross bar (522) in the car seat state locking groove (521) is slidably provided on the carrier body (1), and a locking slider elastic member (133) is provided between the car seat state locking slider (523) and the carrier body (1).
